(19) Europäisches Patentamt
European Patent Office
Office européen des brevets

(11) Numéro de publication : **0 469 941 A1**

(12) # DEMANDE DE BREVET EUROPEEN

(21) Numéro de dépôt : **91401847.8**

(22) Date de dépôt : **04.07.91**

(51) Int. Cl.[5] : **C08F 220/36,** C09K 19/38, G02F 1/35

(30) Priorité : **31.07.90 FR 9009740**

(43) Date de publication de la demande : **05.02.92 Bulletin 92/06**

(84) Etats contractants désignés : **DE GB**

(71) Demandeur : **THOMSON-CSF**
**51, Esplanade du Général de Gaulle**
**F-92800 Puteaux (FR)**

(72) Inventeur : **Le Barny, Pierre**
**THOMSON-CSF SCPI Cédex 67**
**F-92045 Paris la Défense (FR)**
Inventeur : **Broussoux, Dominique**
**THOMSON-CSF SCPI Cédex 67**
**F-92045 Paris la Défense (FR)**
Inventeur : **Dubois, Jean-Claude**
**THOMSON-CSF SCPI Cédex 67**
**F-92045 Paris la Défense (FR)**

(74) Mandataire : **Guérin, Michel et al**
**THOMSON-CSF SCPI**
**F-92045 PARIS LA DEFENSE CEDEX 67 (FR)**

(54) **Copolymères amorphes pour composés photoréfractifs utilisés dans le traitement du signal optique.**

(57) L'invention concerne une série de copolymères amorphes,qui associés à une petite molécule fournissent des matériaux photoréfractifs utilisables dans le traitement du signal optique.Ces copolymères présentent un groupement actif en optique non linéaire et un groupement contribuant à la photoconductivité.

EP 0 469 941 A1

Jouve, 18, rue Saint-Denis, 75001 PARIS

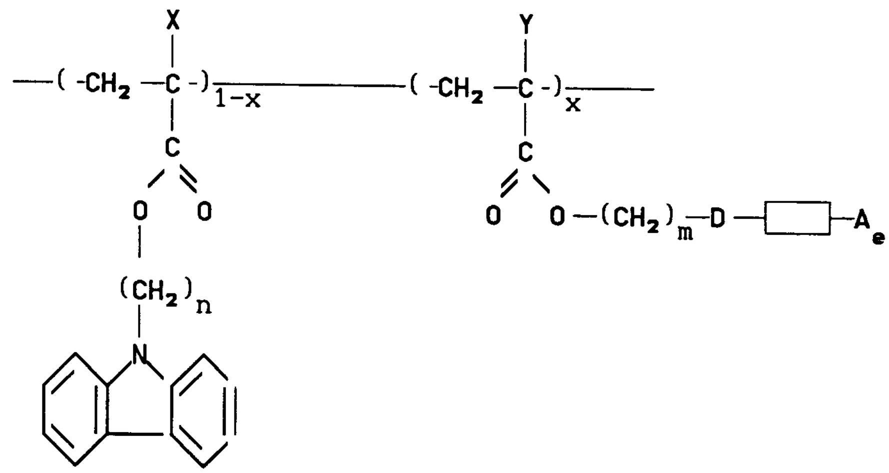

avec : $X = H, CH_3, Cl$ ou $F$

$Y = H, CH_3, Cl$ ou $F$

$2 \leq n \leq 4$

$2 \leq m \leq 4$

D groupe donneur d'électrons étant : —O— , —S— ,

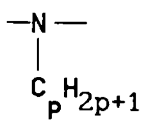 avec $0 \leq p \leq 3$ , 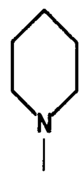 ou —COO—

$A_e$ groupe accepteur d'électrons étant : —CN , $—NO_2$ ,

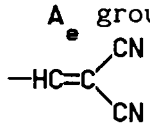 ou 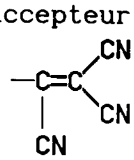

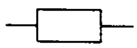 représentant un système riche en électrons

$\pi$ conjugués : -( 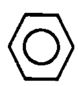 )$_y$ avec $1 \leq y \leq 3$

ou 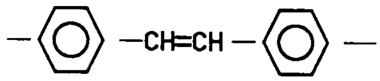

ou 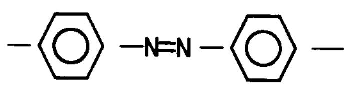

FIGURE I

La présente invention concerne des copolymères amorphes qui associés à certaines petites molécules fournissent des composés photoréfractifs utilisables dans le traitement du signal optique. Plus précisément elle concerne de nouvelles familles de copolymères amorphes à chaînes latérales qui possèdent des groupements chromophores susceptibles de générer des effets optiques non linéaires et des groupements donneurs d'électrons qui associés à des molécules accepteurs d'électrons confèrent au matériau son caractère photoconducteur.

Un matériau est dit photoréfractif lorsqu'une illumination engendre des variations rémanentes d'indice de réfraction. Lorsque ce type de matériau est mis sous tension et est illuminé par une distribution d'intensité incidente, il apparait des variations d'indice de réfraction dans les parties obscures isolantes alors que cette variation tend vers zéro dans les zones éclairées conductrices où la migration des charges annule la tension. Lorsque l'illumination cesse, la situation revient à l'état initial à l'exception du voisinage de la frontière: du côté illuminé de la frontière, le diélectrique s'est appauvri en photoporteurs qui ont migré d'une certaine longueur pour être piégés dans la zone obscure. A la frontière cette création de charges d'espace donne lieu à un champ local dont la manifestation est une variation locale d'indice. Cette variation d'indice subsiste pendant le temps de relaxation diélectrique du matériau (soit plusieurs mois pour des composés tels que le niobate de lithium).

L'effet photoréfractif étant spatialement différentiateur, est utilisé dans des applications telles que :

- l'enregistrement des réseaux holographiques de volume
- les expériences d'interférométrie dynamique
- le traitement d'image
- la déflexion de faisceau laser
- l'amplification optique
- les cavités auto-oscillantes
- le calcul optique (réalisation de mémoires associatives, de logiques élémentaires, d'interconnexions reconfigurables).

Les matériaux photoréfractifs connus actuellement sont des composés inorganiques tels que :

- les cristaux ferroélectriques comme $LiNbO_3$, $BaTiO_3$
- les sillénites comme les cristaux d'oxyde de bismuth et de silicium ($Bi_{12}SiO_{20}$) ou de germanium ($B_{12}GeO_{20}$)
- les composés III-V (GaAs dopé Cr, InP dopé Fe )

Cependant ces matériaux présentent certains inconvénients qui empêchent leur développement. En effet, les composés les plus performants ne sont pas disponibles sous forme de monocristaux de grande dimension et leur coût reste très élevé ; de plus aucun de ces matériaux ne présente à l'heure actuelle, toutes les qualités requises qui sont un temps de réponse très court, une grande sensibilité et une mémoire importante.

Parallèlement à ces composés photoréfractifs inorganiques, les matériaux organiques et plus particulièrement les polymères ont montré qu'ils présentaient des propriétés intéressantes :

- en optique non linéaire. En effet depuis le début des années 1980, les travaux portant sur les polymères amorphes dopés par des molécules à forte hyperpolarisabilité, puis les copolymères amorphes sur lesquels le chromophore est directement attaché, ont prouvé que les propriétés électrooptiques obtenues étaient tout à fait comparables à celles des inorganiques (brevets US 4 828 865, US 4 808 332 déposés par la Société HOECHST CELANESE ,brevets 88 0579, 89 11327 déposés par la demanderesse...)
- en photoconductivité. Ces polymères peuvent être des polymères possédant des liaisons multiples conjuguées comme les polyacéthylènes, le trans polyphénylacéthylène. Ils peuvent posséder des groupes aromatiques formés de plusieurs noyaux benzéniques soit dans leur squelette, soit en chaîne latérale comme les dérivés de l'anthracène, le pyrène, l'acridine. Ils peuvent également posséder des fonctions amines aromatiques, comme le polyvinylcarbazole (PVK). Le PVK dopé avec la 2,4,7 trinitro-9-fluorénone (TNF) est commercialié et offre un intérêt pratique important en reproduction de documents (Xérographie).

Ces matériaux polymériques offrent également une mise en oeuvre généralement simple, permettant d'obtenir des matériaux de grandes dimensions à des coûts beaucoup moins élevés que ceux de fabrication des matériaux inorganiques.

C'est pourquoi, la présente invention propose une série de copolymères amorphes présentant à la fols des propriétés intéressantes en optique non linéaire et en photoconductivité afin d'obtenir des matériaux photoréfractifs organiques, pour application dans le domaine de l'optique et plus particulièrement du traitement du signal optique. Ces copolymères amorphes à chaînes latérales sont constitués :

- d'un groupement présentant une forte hyperpolarisabilité $\beta$ générant des effets optiques non linéaires élevés,l'ingénierie moléculaire permettant d'ajuster cette hyperpolarisabilité et la transparence du matériau en fonction de la longueur d'onde d'utilisation.
- d'un groupement donneur d'électrons qui associé à une petite molécule accepteur d'électrons rend le copolymère photoconducteur.

Ces copolymères répondent de préférence à la formule chimique suivante :

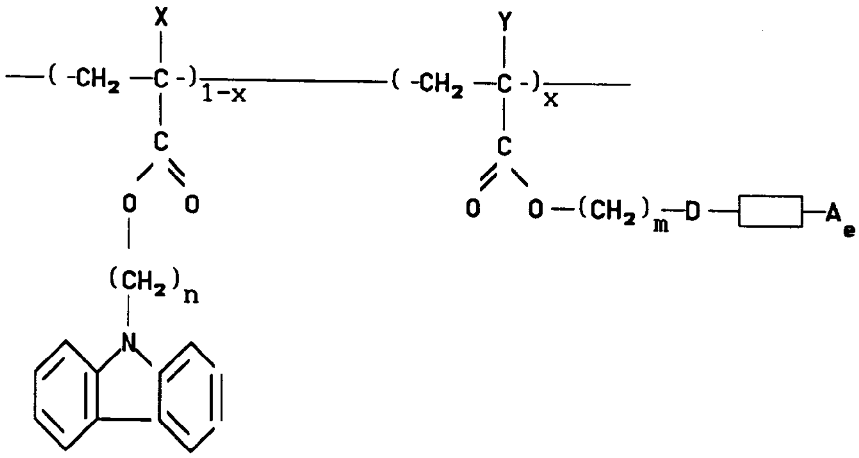

avec

X = H,$CH_3$,Cl ou F
Y = H,$CH_3$,Cl ou F
$2 \leq n \leq 4$
$2 \leq m \leq 4$
D groupe donneur d'électrons étant : —O— , —S— ,

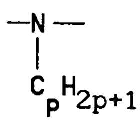 avec $0 \leq p \leq 3$ , 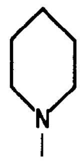 ou —COO—

$A_e$ groupe accepteur d'électrons étant : —CN , —$NO_2$ ,

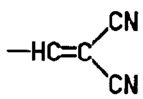 ou 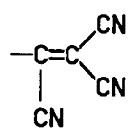

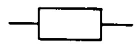 représentant un système riche en électrons π conjugués : -( 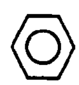 )$_y$- avec $1 \leq y \leq 3$

ou 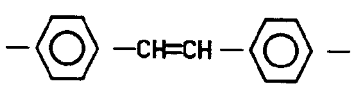

ou 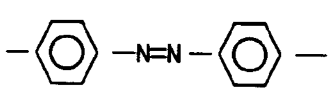

La présente invention a aussi pour objet le mélange photroéfractif obtenu en associant un copolymère selon l'invention et une petite molécule accepteur d'électrons ; cette molécule pouvant être la 2,4,7 trinitro-9-fluorénone.

La présente invention a enfin pour objet l'utilisation de ce mélange organique dans tout dispositlf mettant en jeu l'effet photoréfractif.

L'invention sera mieux comprise et d'autres avantages apparaîtront à la lecture de la description qui va suivre donnée à titre non limitatif et grâce aux figures annexées parmi lesquelles :

– la figure 1 représente une famille de copolymères selon l'invention .

– la figure 2 représente un schéma réactionnel de synthèse du monomère colorant d'un exemple de copolymère selon l'invention

– la figure 3 représente un schéma réactionnel de synthèse du monomère avec groupement donneurs d'électrons d'un exemple de copolymère selon l'invention.

D'une manière générale, les copolymères selon l'invention sont obtenus de préférence par polymérisation radicalaire, utilisant l'azobisisobutyronitrile(AIBN) comme amorceur et la diméthylformamide comme solvant, à 60°C pendant vingt quatre heures. Ce copolymère est précipité dans l'éthanol.

La teneur en colorant est déterminée par spectrométrie UV visible. On va donner ci-dessous un exemple précis de synthèse d'un copolymère selon l'Invention ainsi que ses propriétés optiques non linéaires et photoconductrices :

– synthèse du poly [N (méthacryloyloxyéthyl) carbazole co 4 (N méthacryloyloxypropylamino) nitrobenzène)].

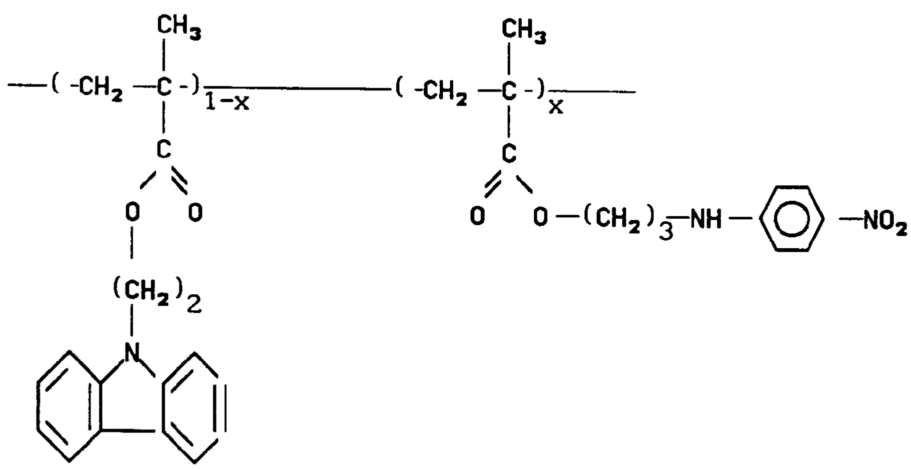

1) La synthèse du monomère colorant 4' (N-méthacryloyloxypropylamino) nitrobenzène est réalisée en 2 étapes à partir du 4 fluoronitrobenzène selon le schéma réctionnel présenté figure 2. Les détails expérimentaux sont indiqués dans le brevet 89 11327 déposé par la demanderesse.

2) La synthèse du monomère N méthacryloyloxyéthyl carbazole est effectuée en 2 étapes à partir du carbazole selon le schéma réactionnel de la figure 3 :

1ère étape : synthèse du N (2 bromoéthyl) carbazole.

Dans un récipient de 500 ml, on prépare 74 ml de solution d'hydroxyde de sodium à 50 % . On ajoute 83 ml de 1,2 dibromoéthane soit 0,96 mole, 10 g de carbazole soit 0,06 mole et 1,72 g de chlorure de benzyltriéthylammonium. On chauffe à 70°C pendant 10 heures avec une forte agitation. On verse le contenu du récipient dans un autre récipient contenant un mélange d'eau et d'hexane. Le produit brut précipite et on le sépare par filtration .Afin d'éliminer le carbazole qui n'a pas réagi on met le solide obtenu dans du chloroforme et l'on agite. Après filtration sur verre fritté, le filtrat récupéré est évaporé, puis recristallisé dans l'éthanol. Les petites aiguilles beiges obtenues ont un point de fusion de 140°C. Le rendement de la réaction est de 35 % .

2ème étape : Synthèse du N (méthacryloyloxyéthyl) carbazole.

Dans un récipient de 50 ml, on met 5 g de N bromo éthyl carbazole soit 0,018 mole, on ajoute 25 ml d'héxa méthylphosphortriamide (HMPA) ; on agite jusqu'à solubilisation complète du N bromoéthylcarbazole. On ajoute alors 3,35 g de méthacrylate de lithium soit 0,036 mole et 0,2 g d'hydroquinone afin d'éviter la polymérisatlon. On agite alors à 40°C durant 24 heures. Le melange réactionnel coulé dans l'eau donne un précipité blanc que l'on filtre sur verre fritté puis que l'on lave à l'eau et à l'hexane afin d'éliminer le méthacrylate de lithium en excès, l'HMPA et l'hydroquinone;

On obtient alors une poudre blanche que l'on purifie par chromatographie avec pour éluant le toluène. On recristallise dans l'éthanol. Le rendement de la réaction est de 45 % , le produit obtenu a un point de fusion de 84°C.

3) Synthèse du copolymère :

Dans une ampoule préscellée, on introduit 3,14 mg de AIBN, 1,41 g (5,05 mole) de N méthacryloyloxyéthyl carbazole, 0,608 g (2,30 mole) de 4 (N méthacryloyloxypropylamino) nitrophényle et 20 ml de diméthylformamide (DMF). Le milieu réactionnel est gelé dans l'air liquide, puis mis sous vide. On laisse revenir à la température ambiante et on renouvelle 2 fois l'opération. Enfin on scelle sous vide. On chauffe alors à 60°C pendant

24 heures. Le copolymère est précipité dans l'éthanol. Le rendement de la copolymérisation est de 61,5 %. La teneur en colorant est déterminée par spectrométrie UV visible : x = 0,237.

La température de transition vitreuse du copolymère est égale à 136,5°C.

Ce copolymère mis en solution dans le 1,1,2 trichloroéthane conduit facilement à la formation de films minces.

Un film de copolymère séché sous vide à 120°C est orienté sous l'action d'un champ électrique continu, créé par une ionisation de l'air délivrée par une pointe métallique portée à très haute tension 4 kV selon la méthode corona.

Ainsi polarisé ce polymère double la fréquence d'un laser YAG opérant à 1,06 μm. Le coefficient $d_{33}$ mesuré est égal à 3 pm $V^{-1}$ (identique à celui obtenu avec du BSO).

Ce même copolymère dopé avec 20 % de TNF conduit à un film qui après orientation par la méthode corona (V = 4 kV) double la fréquence d'un laser YAG ($\lambda$ = 1,06 μm) avec $d_{33}$ = 4 pm $V^{-1}$.

Ce copolymère dopé à 20 % par de la TNF, inséré entre une lame de verre recouverte d'ITO (mélange d'oxyde d'indium et d'étain) et une contre électrode chrome - or présente des propriétés de photoconduction.

En effet la sensibilité $\beta$ définie par l'équation suivante $\sigma = \sigma_o + \beta I$

où $\sigma$ : conductivité sous éclairement

$\sigma_o$ : conductivité dans l'obscurité

I : intensité du flux lumineux

est voisine de 0,5 $10^{-10}\Omega^{-1}$cm $W^{-1}$ pour la longueur d'onde incidente 514 nm. Ce coefficient $\beta$ est de l'ordre de $10^{-9}\Omega^{-1}$cm.$W^{-1}$ pour les polysilanes et de l'ordre de $10^{-7}\Omega^{-1}$cm.$W^{-1}$ pour le cristal photoréfractif de BSO.

Ces copolymères électroactifs et photoconducteurs peuvent être optimisés par un choix judicieux du couple chromophore/groupement photoconducteur et des pourcentages dans le couple et surtout en utilisant ces matériaux aux longueurs d'onde pour lesquelles ils sont optimisés.

## Revendications

1. Copolymères amorphes pour composés photoréfractifs caractérisés en ce qu'ils possédent dans leurs chaines latérales :
   – des groupements A ,chromophores actifs en optique non linéaire
   – des groupements B ,donneurs d'électrons qui associés à des petites molécules C accepteurs d'électrons conduisent à des transferts de charges intermoléculaires.

2. Copolymères amorphes selon la revendication 1 ,caractérisés en ce qu'ils répondent à la formule chimique suivante :

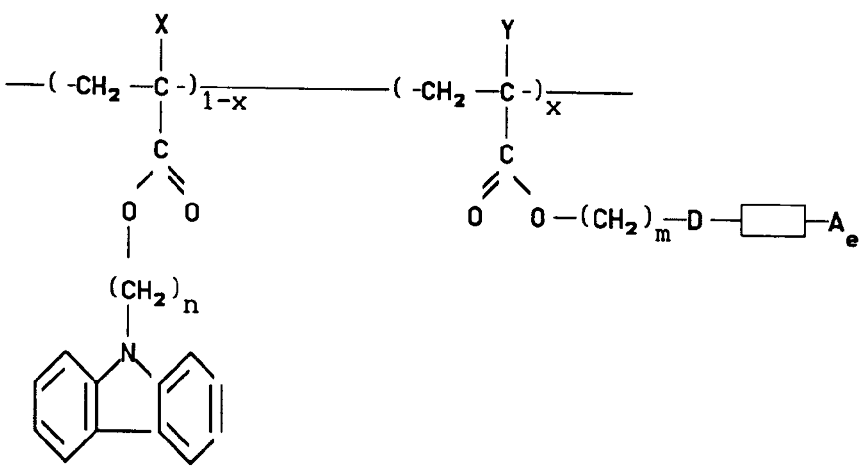

avec :

X = H,$CH_3$,Cl ou F
Y = H,$CH_3$,Cl ou F
$2 \leq n \leq 4$
$2 \leq m \leq 4$
D groupe donneur d'électrons étant : —O— , —S— ,

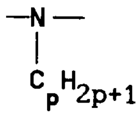 avec $0 \leq p \leq 3$ , 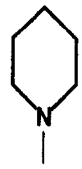 ou —COO—

$A_e$ groupe accepteur d'électrons étant : —CN , —$NO_2$ ,

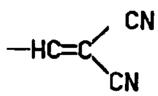 ou 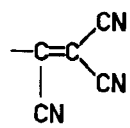

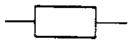 représentant un système riche en électrons

π conjugués : 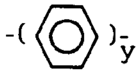 avec $1 \leq y \leq 3$

ou 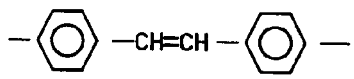

ou 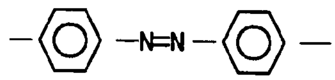

3. Mélange photoréfractif de composés organiques caractérisé en ce qu'il est constitué d'un copolymère selon l'une des revendications 1 ou 2 et d'une petite molécule C accepteur d'électrons , le rapport molaire [C]/[B] étant compris entre 0 et 1 .

4. Mélange photoréfractif selon la revendication 3 ,caractérisé en ce que la petite molécule accepteur d'électrons est la 2,4,7 trinitro-9-fluorénone.

5. Copolymère amorphe selon l'une des revendications 1 ou 2, caractérisé en ce que :
X est $CH_3$
Y est $CH_3$
n = 2
m = 3
D est —NH—

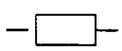 est 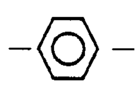

$A_e$ est $NO_2$

6. Dispositif optique caractérisé en ce qu'il utilise un mélange photoréfractif selon l'une des revendications 3 ou 4.

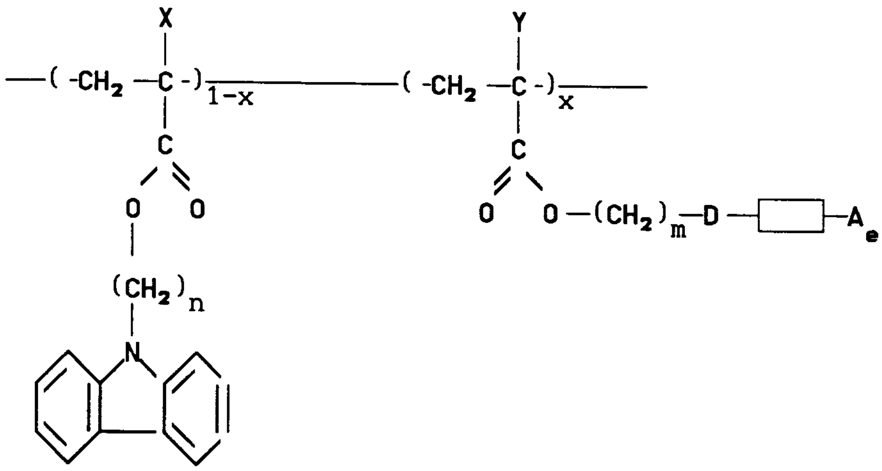

avec : $X = H, CH_3, Cl$ ou F

$Y = H, CH_3, Cl$ ou F

$2 \leq n \leq 4$

$2 \leq m \leq 4$

D groupe donneur d'électrons étant : —O— , —S— ,

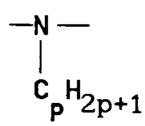 avec $0 \leq p \leq 3$ , 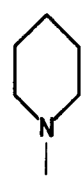 ou —COO—

$A_e$ groupe accepteur d'électrons étant : —CN , $—NO_2$ ,

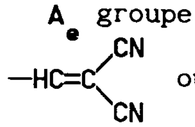 ou 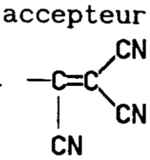

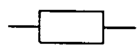 représentant un système riche en électrons

π conjugués : 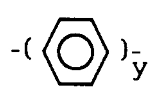 avec $1 \leq y \leq 3$

ou 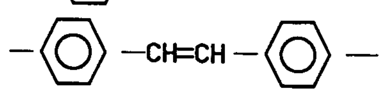

ou 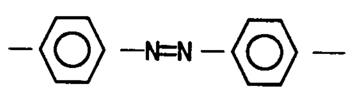

FIGURE I

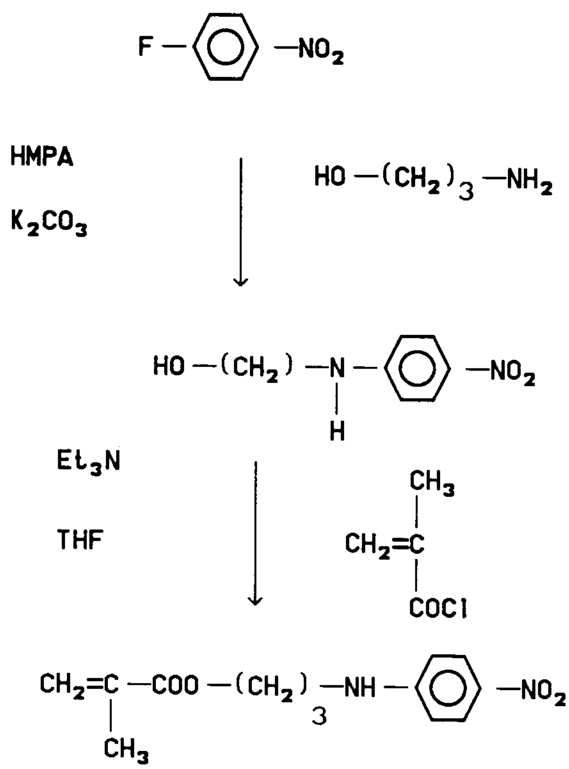


FIGURE II

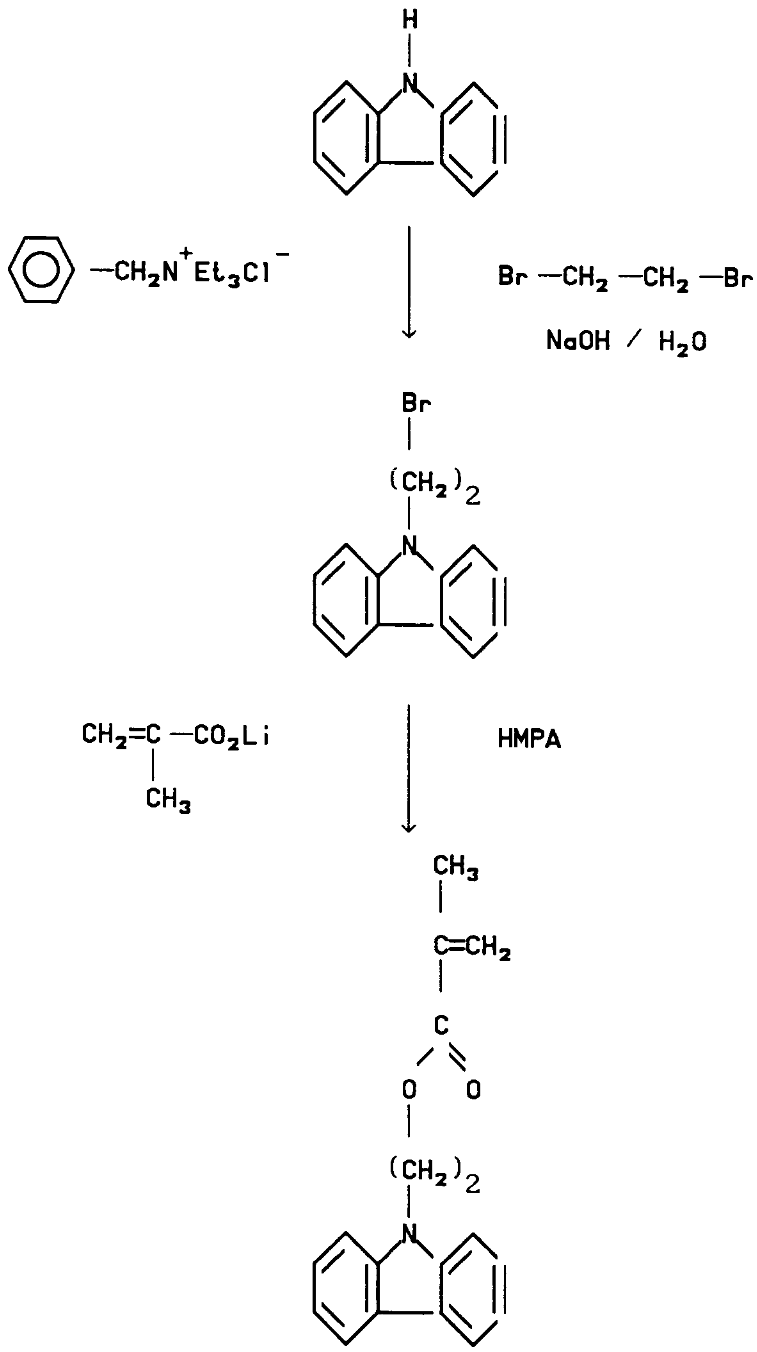


FIGURE III

Office européen des brevets

# RAPPORT DE RECHERCHE EUROPEENNE

Numero de la demande

EP 91 40 1847

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 090 282 (BASF AG)<br>--- | 1,2 | C 08 F 220/36<br>C 09 K 19/38<br>G 02 F 1/35 |
| A | EP-A-0 260 687 (BASF AG)<br>--- | 1,2 | |
| A | EP-A-0 244 288 (THOMSON-CSF)<br>--- | 1,2 | |
| A | EP-A-0 240 276 (EASTMAN KODAK CO.)<br>--- | 1,2 | |
| A | US-A-4 867 538 (H.-N. YOON et al.)<br>----- | 1,3 | |
| | | | **DOMAINES TECHNIQUES RECHERCHES (Int. Cl.5)** |
| | | | C 08 F<br>C 09 K<br>G 02 F |

Le présent rapport a été établi pour toutes les revendications

| Lieu de la recherche | Date d'achèvement de la recherche | Examinateur |
|---|---|---|
| LA HAYE | 23-08-1991 | GLIKMAN J-F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)